(19) Europäisches Patentamt
European Patent Office
Office européen des brevets

(11) **EP 4 618 440 A1**

(12) **EUROPEAN PATENT APPLICATION**
published in accordance with Art. 153(4) EPC

(43) Date of publication:
**17.09.2025 Bulletin 2025/38**

(21) Application number: **23887676.7**

(22) Date of filing: **25.09.2023**

(51) International Patent Classification (IPC):
**H04B 7/185** (2006.01)   **H04W 72/542** (2023.01)

(52) Cooperative Patent Classification (CPC):
**H04B 7/18513; H04B 7/185; H04B 7/1851;**
**H04B 7/18539; H04B 7/1855; H04L 47/80;**
**H04L 49/35; H04W 72/542**

(86) International application number:
**PCT/CN2023/121108**

(87) International publication number:
**WO 2024/098983 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022 CN 202211385270**

(71) Applicant: **ZTE Corporation
Shenzhen, Guangdong 518057 (CN)**

(72) Inventors:
• **ZHANG, Nan
Shenzhen, Guangdong 518057 (CN)**
• **DOU, Jianwu
Shenzhen, Guangdong 518057 (CN)**

(74) Representative: **Casalonga
Casalonga & Partners
Bayerstraße 71/73
80335 München (DE)**

(54) **COMMUNICATION SENSING METHOD AND APPARATUS, AND STORAGE MEDIUM**

(57)    The present disclosure provides a communication sensing method and apparatus, and a storage medium. The method comprises: acquiring a direct reference signal from a satellite and a sensing signal of a target area; and determining an actual value of a communication feature parameter of the target area on the basis of the reference signal and the sensing signal.

FIG. 8

## Description

The present disclosure claims a priority of Chinese Patent Application No. 202211385270.X, filed on November 7, 2022, the entire content of which is incorporated into the present disclosure by reference.

TECHNICAL FIELD

The present disclosure relates to the field of communication technology, and in particular, to a communication sensing method and apparatus, and a storage medium.

BACKGROUND

Currently, 5G (fifth-generation) mobile communication network is developing rapidly, and are gradually evolving towards 6G (sixth-generation) at both technical and service levels. A business element expands from people to a smart entity, a physical space and a virtual space element, and a requirement for an information processing function expands from information delivery to information collection and information calculation. AI (artificial intelligence) service, immersive service, and digital twin service are widely penetrating into vertical application fields. Emerging services have put forward higher demands on an end-to-end information processing capability of 6G networks, so that integrated sensing and communication becomes one of dominant trends of 6G technologies and services.

SUMMARY

In an aspect, there is provided a communication sensing method, where the communication sensing method includes:

acquiring a direct reference signal from a satellite and a sensing signal of a target area; and
determining an actual value of a communication characteristic parameter of the target area based on the reference signal and the sensing signal.

In another aspect, there is provided a communication sensing apparatus, where the communication sensing apparatus includes:

an acquisition module, configured to acquire a direct reference signal from a satellite and a sensing signal of a target area; and
a processing module, configured to determine an actual value of a communication characteristic parameter of the target area based on the reference signal and the sensing signal.

In yet another aspect, there is provided a communication node, where the communication node includes: a memory and a processor. The memory is coupled with the processor; the memory is used to store a computer program; and the processor, upon executing the computer program, implements the communication sensing method in any of the above-mentioned embodiments.

In yet another aspect, there is provided a computer-readable storage medium, where the computer-readable storage medium has computer program instructions stored thereon, and the computer program instructions, upon being executed by a processor, implement the communication sensing method in any of the above-mentioned embodiments.

In yet another aspect, there is provided a computer program product, where the computer program product includes computer program instructions, and the computer program instructions, upon being executed by a processor, implement the communication sensing method in any of the above-mentioned embodiments.

BRIEF DESCRIPTION OF THE DRAWINGS

FIG. 1 is a schematic diagram of an application scenario of a communication sensing method according to some embodiments.
FIG. 2 is a flow chart of a communication sensing method according to some embodiments.
FIG. 3 is a schematic diagram of a geometric relationship of a specular reflection point according to some embodiments.
FIG. 4 is a schematic diagram of a calculation process of a two-dimensional correlation power value according to some embodiments.

FIG. 5 is a schematic diagram of a combined processing process of a coherent accumulation and an incoherent accumulation according to some embodiments.

FIG. 6 is a delay-Doppler scattering geometric distribution diagram of an airborne scenario according to some embodiments.

FIG. 7 is a delay-Doppler scattering geometric distribution diagram of a space-borne scenario according to some embodiments.

FIG. 8 is a flow chart of another communication sensing method according to some embodiments.

FIG. 9 is a flow chart of yet another communication sensing method according to some embodiments.

FIG. 10 is a schematic structural diagram of a communication node according to some embodiments.

FIG. 11 is a schematic structural diagram of a hardware of a communication node according to some embodiments.


DETAILED DESCRIPTION

To make those skilled in the art to better understand the technical solutions of the embodiments of the present disclosure, the technical solutions in the embodiments of the present disclosure will be described clearly and completely in combination with the accompanying drawings in the embodiments of the present disclosure. Obviously, the described embodiments are merely a part of embodiments of the present disclosure, but not all of the embodiments of the present disclosure. All other embodiments obtained according to the embodiments of the present disclosure by a person of ordinary skill in the art on a premise of without making any creative effort shall belong to the protection scope of the present disclosure.

In the description of the present disclosure, unless otherwise stated, "/" represents "or". For example, A/B may represent A or B. The term "and/or" includes any and all combinations of one or more related listed items. For example, A and/or B includes: A exists alone, A and B exist simultaneously, and B exists alone.

In the description of the present disclosure, unless otherwise stated, "at least one" refers to one or more, and "a plurality of" refers to two or more than two. The words "first", "second", etc., do not limit a quantity and an order of execution, and the words "first", "second", etc., do not necessarily limit there must be a difference.

It should be noted that in the present disclosure, the words, such as "exemplarily" or "for example", etc., are used to represent an example, an instance or an illustration. Any embodiment or design solution described by "exemplarily" or "for example" in the present disclosure should not be construed as preferred or more advantageous over other embodiments or design solutions. Rather, the usage of words such as "exemplarily" or "for example" is intended to present relevant concepts in a specific manner.

Communication is transmission of information between two or more points; and sensing is probing a parameter of a physical environment, such as speed measuring, target positioning, etc.

Integrated sensing and communication refers to the Integration of a communication function and a sensing function of a communication system, so that a future communication system has both the communication function and the sensing function. That is, a physical characteristic of a surrounding environment can be sensed by actively recognizing and analyzing a characteristic of a channel while transmitting information on a wireless channel, thereby enabling mutually enhancing the communication function and the sensing function.

In the integrated sensing and communication, a sensing capability focuses on wireless signal sensing, that is, sensing of a target object or environmental information (e.g., an attribute and a status) is obtained by analyzing a direct signal, a reflected signal, and a scattered signal of a radio wave, and functions, such as positioning, ranging, speed measuring, imaging, detection, identification, environment reconstructing, etc., are completed, thereby enabling a communication system to sense and explore a physical world. For example, a signal of a base station is used for sensing information in a surrounding environment to design a communication link, and thus, some obstacles can be avoided, thereby improving communication performance.

In order to improve a sensing capability of a communication node, the embodiments of the present disclosure provide a communication sensing method, where a communication characteristic parameter related to a target area can be sensed by acquiring a reference signal from a satellite and a sensing signal of the target area, and based on an analysis of the reference signal and the sensing signal. The communication characteristic parameter related to the target area can reflect a service requirement or an environmental characteristic of the target area, and thus it is helpful for a communication node to formulate a corresponding communication strategy to improve communication performance. In this way, the sensing capability of the communication node is enhanced.

The technical solutions provided by the embodiments of the present disclosure can be applied to various communication systems, such as a long term evolution (LTE) communication system, a new radio (NR) communication system adopting 5G communication technology, a future evolution system or a variety of communication converged systems, etc., which is not limited in the present disclosure.

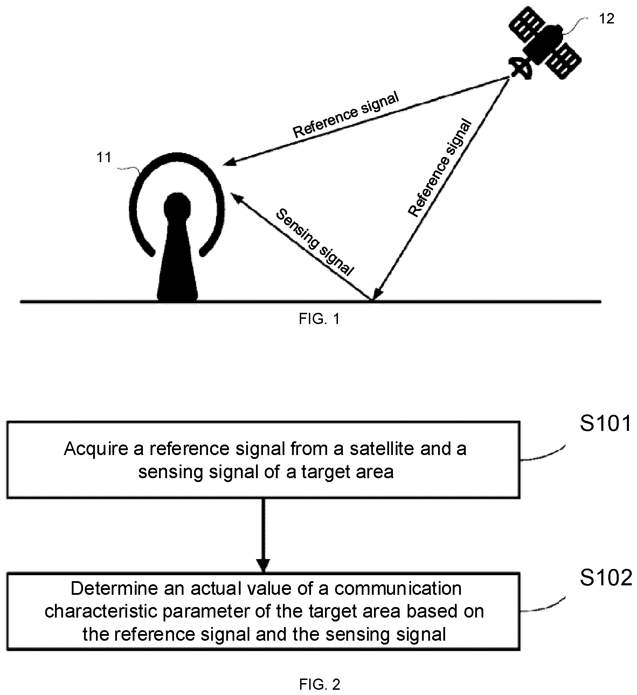

FIG. 1 is schematic diagram of an application scenario of a communication sensing method according to some embodiments. As shown in FIG. 1, in this application scenario, a communication node 11 includes a receiver, and the receiver is used to receive a reference signal from a satellite 12 and a sensing signal of a target area.

In some embodiments, the satellite 12 may be a satellite in a global navigation satellite system (GNSS). GNSS can provide a user with functions, such as navigation and positioning information, a precise timing service, etc., and can further provide a highly stable and L-band microwave signal resource that can be used for a long term, and is widely applied in many aspects, such as surveying and mapping, earthquake monitoring, geological exploration, offshore and desert oil development, fishery, civil engineering, archaeological excavation, iceberg tracking, search and rescue, resource survey, forest and mountain tourism, intelligent transportation, and missile guidance in a military field.

In some embodiments, the communication node 11 may be a base station. The base station can be used to implement functions, such as resource scheduling, wireless resource management, wireless access control of a terminal, etc. Exemplarily, the base station may be a small base station, a wireless access point, a transmission receive point (TRP), a transmission point (TP) and any node of a certain type of other access nodes.

In other embodiments, the communication node 11 may also be a terminal. The terminal may also be referred to as a terminal device, a user equipment (UE), a mobile station, a mobile terminal, etc. Exemplarily, the terminal may be a mobile phone, a tablet computer, a computer with a wireless transceiving function, a virtual reality terminal, an augmented reality terminal, a wireless terminal in industrial control, a wireless terminal in unmanned driving, a wireless terminal in remote surgery, a wireless terminal in transportation safety, a wireless terminal in a smart city, a wireless terminal in a smart home, etc. The embodiments of the present disclosure do not limit modalities of devices adopted by the terminal.

FIG. 2 is a flow chart of a communication sensing method according to some embodiments. As shown in FIG. 2, the embodiments of the present disclosure provide a communication sensing method applied to the communication node 11 in FIG. 1. The method includes S101 to S102.

In S101, a reference signal from a satellite 12 and a sensing signal of a target area are acquired.

The target area may be an entire communication area of the communication node 11, or a part of the communication area. The target area may be determined by the communication node 11 itself, or may be designated by an upper management node (e.g., a network element of a core network or an operation and maintenance management system) of the communication node 11.

In some embodiments, a satellite search procedure is made after powering on. In the satellite search procedure, the communication node 11 may search for the satellite 12 based on its own position information and a broadcast ephemeris. After the satellite 12 is searched, the reference signal from the satellite 12 may be acquired. The ephemeris may be pre-stored, or may also be reacquired in the satellite search procedure.

In some embodiments, the communication node 11 receives a signal through a beam matching the target area, and screens out the sensing signal from the signal received from the beam matching the target area. For example, the sensing signal may be screened out from the signal received from the beam matching the target area in a smooth filtering manner.

In S102, an actual value of a communication characteristic parameter of the target area is determined based on the reference signal and the sensing signal.

Exemplarily, the communication characteristic parameter may include one or more of: a delay, a Doppler frequency shift, a variation value of delay, and a variation value of Doppler frequency shift, which is not limited in the present disclosure. The variation value of delay is used to characterize a changing situation of the delay of the target area at different moments, for example, the variation value of delay may be determined by a delay at a current moment and a delay at a previous moment. The variation value of Doppler frequency shift is used to characterize a changing situation of the Doppler frequency shift of the target area at different moments, for example, the variation value of Doppler frequency shift may be determined by a Doppler frequency shift at a current moment and a Doppler frequency shift at a previous moment.

In the embodiments of the present disclosure, the communication node 11 may determine the actual value of the communication characteristic parameter of the target area by analyzing changes between the sensing signal and the reference signal in an aspect of parameter, such as intensity, frequency, phase, polarization direction, etc. The actual value of the communication characteristic parameter of the target area may be used to invert a dynamic change in an earth's surface environment and a change in a service requirement in the target area.

First, the communication node 11 acquires position information of the satellite 12 and position information of a receiver of the communication node, and determines position information of a specular reflection point based on the position information of the satellite 12 and the position information of the receiver of the communication node. The specular reflection point is a reflection position with the shortest path of all possible paths from a transmitter of the satellite 12 to the receiver through earth's surface reflection.

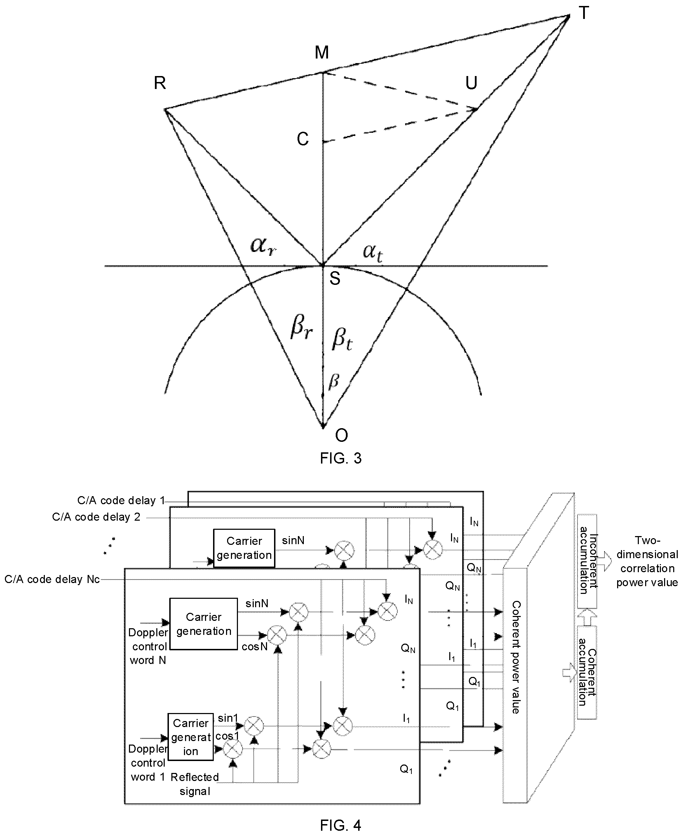

In the following, an estimation algorithm of a specular reflection point is introduced based on line dichotomy. FIG. 3 is a schematic diagram of a geometric relationship of a specular reflection point according to some embodiments. In FIG. 3, R represents a position of a receiver; T represents a position of a transmitter; S represents a position of a specular reflection point; O represents a position of the center of the earth; M is an intersection of an extended line of OS and RT; U is a mirror point of R relative to MS; C is a symmetric point of M relative to a line RU; $\alpha_r$ represents an elevation angle of a satellite relative to the specular reflection point; $\beta_r$ represents an included angle between the receiver and the specular reflection point as viewed from the center of the earth; $\beta_t$ represents an included angle between the transmitter and the specular reflection point as viewed from the center of the earth; $\beta$ represents an included angle between the receiver and the transmitter as viewed from the center of the earth. In this way, according to the basic geometric theory, formula (1) to formula (6) can be derived, and thus based on the formula (1) to formula (6), the position information of the specular reflection point may be solved:

$$\alpha_r = cos^{-1}\left(\frac{|RS|^2 + |OS|^2 - |OR|^2}{2|RS| \times |OS|}\right) - \frac{\pi}{2} \qquad\qquad \text{formula (1)}$$

$$\alpha_t = cos^{-1}\left(\frac{|TS|^2 + |OS|^2 - |OT|^2}{2|TS| \times |OS|}\right) - \frac{\pi}{2} \qquad\qquad \text{formula (2)}$$

$$\alpha_r = \alpha_t \qquad\qquad \text{formula (3)}$$

$$\beta = cos^{-1}\left(\frac{|OR|^2 + |OT|^2 - |RT|^2}{2|OR| \times |OT|}\right) - \frac{\pi}{2} \qquad\qquad \text{formula (4)}$$

$$\overrightarrow{OM} = \overrightarrow{OR} + \overrightarrow{RM} \qquad\qquad \text{formula (5)}$$

$$\overrightarrow{OS} = \frac{|OS|}{|OM|}\overrightarrow{OM} \qquad\qquad \text{formula (6)}$$

It should be understood that the position information of the specular reflection point can further be solved by adopting other methods, such as an ellipsoid surface algorithm, a plane algorithm, etc., which are not limited in the present disclosure.

Afterward, the communication node 11 uses the specular reflection point as a reference point in a delay-Doppler two-dimensional correlation power spectrum to perform correlation calculation on the sensing signal, and obtains a two-dimensional correlation power value corresponding to the sensing signal.

FIG. 4 is a schematic diagram of a calculation process of a two-dimensional correlation power value according to some embodiments. As shown in FIG. 4, during the calculation process of the two-dimensional correlation power value, the communication node 11 first produces C/A code sequences with different code delays in parallel, and generates carrier sequences with different Doppler frequency shifts based on different Doppler control words. A correlation operation is performed between the sensing signal and the C/A code sequences and the carrier sequences to obtain corresponding calculation power values. Afterward, a coherent accumulation and an incoherent accumulation are performed on the calculation power values to obtain a two-dimensional calculation power value.

It should be understood that an attenuation of the sensing signal is greater than that of the reference signal, so the coherent accumulation and the incoherent accumulation are used to increase a signal-to-noise ratio when the two-dimensional correlation power value of the sensing signal is solved.

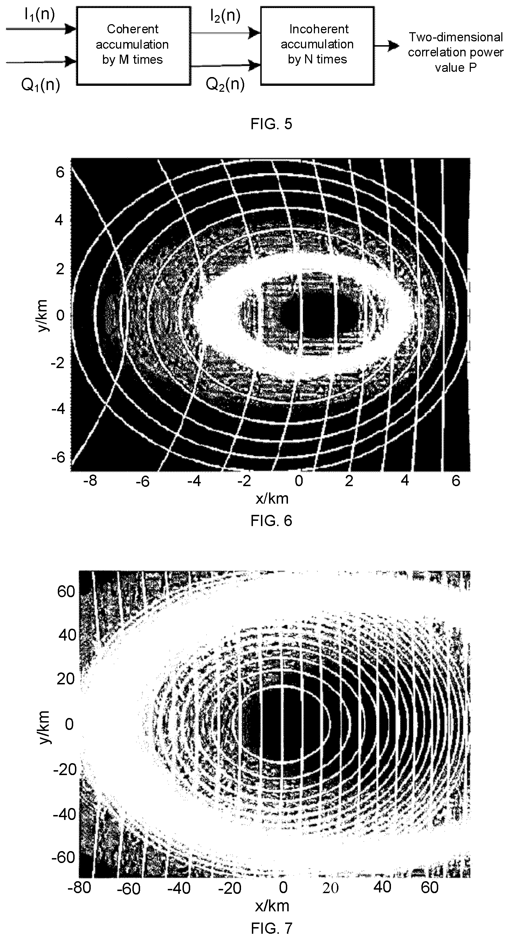

FIG. 5 is a schematic diagram of a combined processing process of a coherent accumulation and an incoherent accumulation according to some embodiments. As shown in FIG. 5, the coherent accumulation is performed first on correlation power values ($I_1(n)$ and $Q_1(n)$) by M times to obtain coherent-accumulated correlation power values ($I_2(n)$ and $Q_2(n)$); and afterward, the incoherent accumulation is then performed on the coherent-accumulated correlation power values by N times to obtain a two-dimensional correlation power value P. The above-mentioned processing procedure satisfies the following formula (7) to formula (9). $I_1(n)$ and $I_2(n)$ are in-phase signals, $Q_1(n)$ and $Q_2(n)$ are quadrature signals.

$$I_2 = \frac{1}{M}\sum_{n=1}^{M} I_1(n) \qquad\qquad \text{formula (7)}$$

$$Q_2 = \frac{1}{M} \sum_{n=1}^{M} Q_1(n) \qquad\qquad \text{formula (8)}$$

$$P = \frac{1}{N} \sum_{n=1}^{N} \sqrt{I_2^2(n) + Q_2^2(n)} \qquad\qquad \text{formula (9)}$$

It should be understood that the delay-Doppler two-dimensional correlation power value may be used to describe a reflection intensity of the sensing signal in different reflection surface units, and a maximum value in amplitude of the delay-Doppler two-dimensional correlation power value is used to describe a reflectivity of a reflection medium to the sensing signal; a delay of the two-dimensional correlation power value may be used to describe a path delay relationship of the sensing signal relative to the reference signal; and a phase of the two-dimensional correlation power value may be used to describe a coherence characteristic of the sensing signal itself.

In some embodiments, after the delay-Doppler two-dimensional correlation power value of the target area is calculated, a delay-Doppler scattering geometric distribution diagram reflecting the two-dimensional correlation power value may be drawn. Exemplarily, FIG. 6 is a delay-Doppler scattering geometric distribution diagram of an airborne scenario according to some embodiments. FIG. 7 is a delay-Doppler scattering geometric distribution diagram of a space-borne scenario according to some embodiments. For a sea surface scenario, since there is no obstacle, the delay-Doppler scattering geometric distribution presents an isoline area approximate to an ellipse. For a terrestrial environment, due to the complexity of the environment, a more complex delay-Doppler scattering geometric distribution diagram will be formed. Therefore, the communication node 11 can understand an environmental change and a service demand change of the target area according to delay-Doppler scattering geometric distribution diagrams of the target area at different moments. For example, based on an AI algorithm of image recognition category, the delay-Doppler scattering geometric distribution diagrams of the target area may be analyzed, thereby identifying the environmental change and the service demand change of the target area.

In the embodiments of the present disclosure, a reference signal from a satellite 12 and a sensing signal of a target area are acquired, and a communication characteristic parameter related to the target area can be sensed based on an analysis of the reference signal and the sensing signal. The communication characteristic parameter related to the target area can reflect a service requirement or an environmental characteristic of the target area. For example, in a case where there are many moving objects in the target area (e.g., the target area is a transportation area), a Doppler frequency shift of the target area is large; and in a case where there are few moving objects in the target area (e.g., the target area is a farmland), a Doppler frequency shift of the target area is small. For another example, in a case where a terrain is complex and there are many obstacles in the target area, a delay of the target area is large; and in a case where a terrain is simple and there are few obstacles in the target area, a delay of the target area is small.

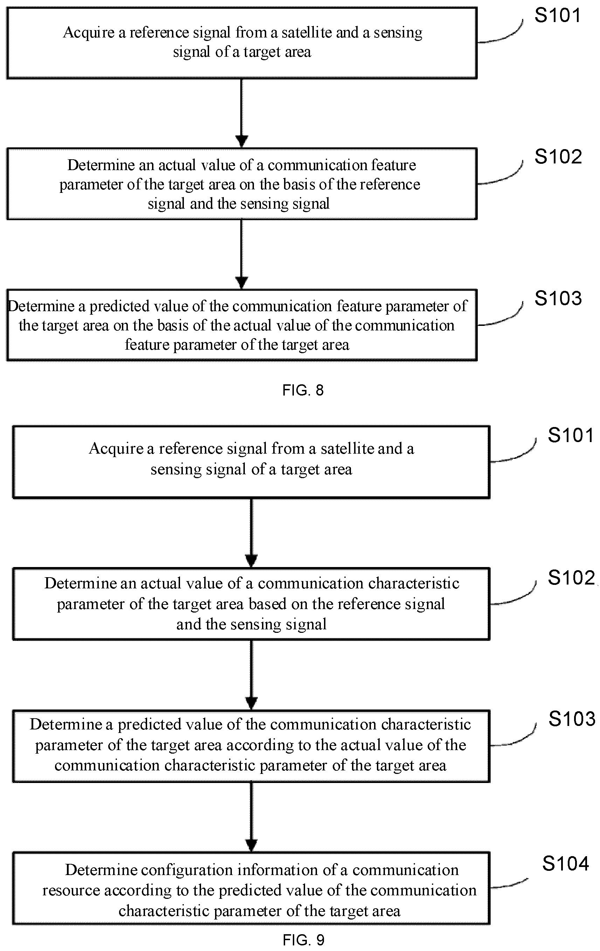

In some embodiments, FIG. 8 is a flow chart of another communication sensing method according to some embodiments. Based on the embodiment shown in FIG. 2, as shown in FIG. 8, the communication sensing method further includes S103.

In S103, a predicted value of the communication characteristic parameter of the target area is determined according to the actual value of the communication characteristic parameter of the target area.

In some embodiments, a weighted sum calculation is performed on the actual value of the communication characteristic parameter of the target area at a first moment and the predicted value of the communication characteristic parameter of the target area at the first moment to obtain a predicted value of the communication characteristic parameter of the target area at a second moment after the first moment.

Exemplary, a formula of the weighted sum calculation may refer to the following formula (10).

$$S_t = a y_{t-1} + (1-a) S_{t-1} \qquad\qquad \text{Formula(10)}$$

where $S_t$ represents a predicted value at a moment t, $S_{t-1}$ represents a predicted value at a moment t-1, $y_{t-1}$ represents an actual value at a moment t-1, a is a smoothing constant (i.e., a weight coefficient), and a value range of a is [0, 1]. It should be understood that the smoothing constant a determines a level of smoothing and a speed of response to a difference between the predicted value and an actual result. The closer the smoothing constant a is to 1, the faster a decrease in an impact degree of the long-term actual value on the current predicted value is; and the closer the smoothing constant a is to 0, the slower a decrease in an impact degree of the long-term actual value on the current predicted value is.

In the above-mentioned formula (10), as long as actual values and initial predicted values of the communication characteristic parameter of the target area at all previous moments are acquired, the predicted value of the communication characteristic parameter of the target area at the moment t can be calculated to complete the prediction. The predicted value at each moment is related to the actual value and the predicted value at a previous moment, and the predicted value at the previous moment is recursively calculated according to values of all previous moments. Therefore, the rationality of a final prediction result is ensured. Past data is not discarded, but an impact degree of the past data is gradually weakened, that is, as time goes by, an impact of data on the final prediction result becomes smaller and smaller.

In other embodiments, the actual value of the communication characteristic parameter of the target area is input into a timing prediction model to obtain a predicted value of the communication characteristic parameter of the target area output by the timing prediction model.

Exemplarily, the above-mentioned timing prediction model may be a long short-term memory (LSTM) neural network model, or may be a Prophet timing prediction model, or may be an autoregressive integrated moving average model (ARIMA) model, etc., which is not limited in the present disclosure.

In the embodiments of the present disclosure, the communication node 11 can sense information, such as a communication demand, a service change, etc., of the target area at a future moment based on the predicted value of the communication characteristic parameter of the target area obtained by prediction, and then can take corresponding measures in advance to improve the communication performance.

FIG. 9 is a flow chart of yet another communication sensing method according to some embodiments. In some embodiments, based on the embodiment shown in FIG. 8, as shown in FIG. 9, the communication sensing method further includes S104.

In S104, configuration information of a communication resource is determined according to the predicted value of the communication characteristic parameter of the target area.

The configuration information of the communication resource includes one or more of: a first resource proportion, a second resource proportion, and a service type supported by a resource block. The first resource proportion is used to characterize a ratio of a number of time domain units occupied by the reference signal in the resource block to a number of time domain units included in the resource block. The second resource proportion is used to characterize a ratio of a number of frequency domain units occupied by the reference signal in the resource block to a number of frequency domain units included in the resource block.

In some embodiments, the resource block may be a physical resource block (PRB). The time domain unit in the resource block may be a symbol, and the frequency domain unit in the resource block may be a carrier.

In some embodiments, in a case where the predicted value of the delay of the target area is greater than a preset threshold, the service type supported by the resource block only includes a non-low-delay service. Or, in a case where the predicted value of the delay in the target area is less than or equal to a preset threshold, the service type supported by the resource block includes a low-delay service and a non-low-delay service. In this way, the low-delay service can be avoided to be performed in an area with a higher delay, but the low-delay service can be performed in an area with a lower delay, thereby ensuring performing the low-delay service normally.

In some embodiments, the first resource proportion is positively correlated with the predicted value of the delay of the target area. Based on this, in an area with a larger delay, more time domain units occupied by the reference signal are configured in the resource block, so that a channel estimation result in this area can be more accurate.

In some embodiments, the second resource proportion is positively correlated with the predicted value of the Doppler frequency shift of the target area. Based on this, in an area with a larger Doppler frequency shift, the communication node 11 configures more frequency domain units occupied by the reference signal in the resource block, so that a channel estimation result in this area can be more accurate.

In some embodiments, the configuration information of the communication resource may be updated periodically. That is, at a starting moment of each configuration updating period, the predicted value of the communication characteristic parameter of the target area may be re-determined, and based on the re-determined predicted value of the communication characteristic parameter of the target area, the configuration information of the communication resource may be re-determined.

In the embodiments of the present disclosure, since the predicted value of the communication characteristic parameter of the target area can reflect a service demand or a communication environment of the target area in the future, the configuration information of the communication resource determined by the communication node 11 according to the predicted value of the communication characteristic parameter of the target area, can effectively face the service demand or the communication environment of the target area in the future, thereby achieving the purpose of improving the communication performance of the communication node 11.

It can be understood that, in order to achieve the above-mentioned function, the communication node 11 includes corresponding hardware structures and/or software modules for executing respective functions. Those skilled persons in the art should easily realize that algorithm steps of respective examples described in combination with the embodiments of the present disclosure can be implemented in the form of a hardware or a combination of hardware and computer software in the embodiments of the present disclosure. Whether a certain function is performed by a hardware or a computer software driving a hardware depends on a specific application and a design constraint of the technical solution.

Professional technicians may use different methods to implement the described functions for each specific application, but such implementation should not be considered beyond the scope of the present disclosure.

The embodiments of the present disclosure may divide the communication node 11 into functional modules according to the above-mentioned method embodiments. For example, each functional module may be divided corresponding to each function, or two or more than one functions may be integrated into one functional module. The above-mentioned integrated module may be implemented in a form of hardware, or may also be implemented in a form of software. It should be noted that the division of the functional modules in the embodiments of the present disclosure is schematic, which is only a logical functional division, and there may be other division manners in an actual implementation. The following makes a description by taking an example of dividing each functional module according to each function.

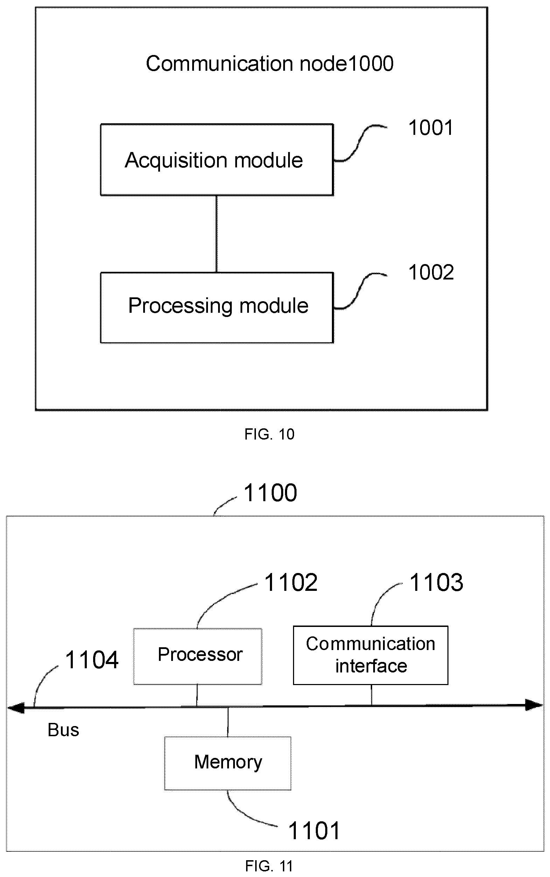

FIG. 10 is a schematic structural diagram of a communication node according to some embodiments, and the communication node may perform the communication sensing method provided by the above-mentioned method embodiments. As shown in FIG. 10, the present disclosure provides a communication node 1000, and the communication node 1000 includes: an acquisition module 1001 and a processing module 1002.

The acquisition module 1001 is configured to acquire a direct reference signal from a satellite and a sensing signal of a target area.

The processing module 1002 is configured to determine an actual value of a communication characteristic parameter of the target area based on the reference signal and the sensing signal.

In some embodiments, the communication characteristic parameter includes a delay and/or a Doppler frequency shift.

In some embodiments, the processing module 1002 is further configured to determine a predicted value of the communication characteristic parameter of the target area based on the actual value of the communication characteristic parameter of the target area.

In some embodiments, the processing module 1002 is further configured to determine configuration information of a communication resource based on the predicted value of the communication characteristic parameter of the target area.

In some embodiments, the configuration information of the communication resource includes one or more of: a first resource proportion, a second resource proportion, and a service type supported by a resource block. The first resource proportion is used to characterize a ratio of a number of time domain units occupied by the reference signal in the resource block to a number of time domain units included in the resource block, and the second resource proportion is used to characterize a ratio of a number of frequency domain units occupied by the reference signal in the resource block to a number of frequency domain units included in the resource block.

In some embodiments, in a case where a predicted value of a delay in the target area is greater than a preset threshold, the service type supported by the resource block only includes a non-low-delay service; and in a case where a predicted value of a delay in the target area is less than or equal to a preset threshold, the service type supported by the resource block includes a low-delay service and a non-low-delay service.

In some embodiments, the first resource proportion is positively correlated with the predicted value of the delay of the target area.

In some embodiments, the second resource proportion is positively correlated with a predicted value of a Doppler frequency shift of the target area.

In some embodiments, the processing module 1002 is configured to perform a weighted sum calculation on an actual value of the communication characteristic parameter of the target area at a first moment and a predicted value of the communication characteristic parameter of the target area at the first moment to obtain a predicted value of the communication characteristic parameter of the target area at a second moment after the first moment.

In some embodiments, the processing module 1002 is configured to input the actual value of the communication characteristic parameter of the target area into a timing prediction model to obtain the predicted value of the communication characteristic parameter of the target area output by the timing prediction model.

In some embodiments, the acquisition module 1001 is further configured to receive a signal through a beam matching the target area and screen out the sensing signal from the signal received from the beam matching the target area.

FIG. 11 is a schematic structural diagram of a hardware of a communication node according to some embodiments of the present disclosure. In a case where the function of the above-mentioned integrated module is implemented by adopting a form of hardware, the embodiments of the present disclosure provide another possible structure of the communication node involved in the above-mentioned embodiments. As shown in FIG. 11, the communication node 1100 includes a processor 1102 and a bus 1104. Exemplarily, the communication node may further include a memory 1101; and exemplarily, the communication node may further include a communication interface 1103.

The processor 1102 may be various exemplary logical blocks, modules and circuits that are implemented or executed and described in combination with the embodiments of the present disclosure. The processor 1102 may be a central processor, a general-purpose processor, a digital signal processor, an application specific integrated circuit, a field programmable gate array, or any other programmable logic device, a transistor logic device, a hardware component, or any combination of the above. The processor 1102 may implement or execute various illustrative logical blocks, modules and circuits described in combination with the embodiments of the present disclosure. The processor 1102 may also a combination that implements computing functions, for example, a combination including one or more microprocessors, a combination of a DSP (digital signal processor) and a microprocessor, etc.

The communication interface 1103 is used to connect to other devices through a communication network. The communication network may be Ethernet, a wireless access network, a wireless local area network (WLAN), etc.

The memory 1101 may be, but is not limited to, a read-only memory (ROM) or a static storage device of other types that can store static information and instructions, a random access memory (RAM), or a dynamic storage device of other types that can store information and instructions; or may also be an electrically erasable programmable read-only memory (EEPROM), a magnetic disk storage medium or other magnetic storage device, or any other medium that can be used to carry or store desired program codes with instructions or a data structure form and can be accessed by a computer, which is however not limited thereto.

In some embodiments of the present disclosure, the memory 1101 may exist independently of the processor 1102, and the memory 1101 may be connected to the processor 1102 through the bus 1104, and is used for storing instructions or program codes. The processor 1102, upon calling and running the instructions or program codes stored in the memory 1101, may implement the communication sensing method provided by the embodiments of the present disclosure.

In some other embodiments of the present disclosure, the memory 1101 and the processor 1102 may be integrated together.

The bus 1104 may be an extended industry standard architecture (EISA) bus, etc. The bus 1104 may be classified into an address bus, a data bus, a control bus, etc. For ease of representation, only one bold line is used for representation in FIG. 11, but it does not represent that there is only one bus or a bus of one type.

Some embodiments of the present disclosure provide a computer-readable storage medium (e.g., a non-transitory computer-readable storage medium), and the computer-readable storage medium stores computer program instructions. The computer program instructions, upon being executed on a computer, cause the computer to perform the communication sensing method described in any one of the above-mentioned embodiments.

Exemplarily, the above-mentioned computer-readable storage medium may include, but is not limited to: a magnetic storage device (e.g., a hard disk, a floppy disk, or a magnetic tape, etc.), an optical disk (e.g., a compact disk (CD)), a digital versatile disk (DVD), a smart card and a flash memory device (e.g., an erasable programmable read-only memory (EPROM), a card, a stick or a key drive, etc.). Various computer-readable storage mediums described in the present disclosure may be representative of one or more devices and/or other machine-readable storage mediums for storing information. The term "machine-readable storage medium" may include, but is not limited to, a wireless channel and various other mediums capable of storing, including, and/or carrying instructions and/or data.

The embodiments of the present disclosure provide a computer program product including computer instructions, and the computer instructions, upon being executed on a computer, cause the computer to perform the communication sensing method described in any one of the above-mentioned embodiments.

The above are only specific implementations of the present disclosure, but the protection scope of the present disclosure is not limited thereto, and any variations or replacements within the technical scope disclosed in the present disclosure shall be covered within the protection scope of the present disclosure. Therefore, the protection scope of the present disclosure shall be based on the protection scope of the claims.

**Claims**

1.  A communication sensing method, comprising:

    acquiring a direct reference signal from a satellite and a sensing signal of a target area; and
    determining an actual value of a communication characteristic parameter of the target area based on the reference signal and the sensing signal.

2.  The method according to claim 1, wherein the communication characteristic parameter comprises a delay and/or a Doppler frequency shift.

3.  The method according to claim 2, further comprising:
    determining a predicted value of the communication characteristic parameter of the target area based on the actual value of the communication characteristic parameter of the target area.

4.   The method according to claim 3, further comprising:
determining configuration information of a communication resource based on the predicted value of the communication characteristic parameter of the target area.

5.   The method according to claim 4, wherein the configuration information of the communication resource comprises one or more of: a first resource proportion, a second resource proportion, and a service type supported by a resource block;
the first resource proportion is used to characterize a ratio of a number of time domain units occupied by the reference signal in the resource block to a number of time domain units included in the resource block; and the second resource proportion is used to characterize a ratio of a number of frequency domain units occupied by the reference signal in the resource block to a number of frequency domain units included in the resource block.

6.   The method according to claim 5, wherein

in a case where a predicted value of a delay in the target area is greater than a preset threshold, the service type supported by the resource block only comprises a non-low-delay service; or
in a case where a predicted value of a delay in the target area is less than or equal to the preset threshold, the service type supported by the resource block comprises a low-delay service and a non-low-delay service.

7.   The method according to claim 5, wherein the first resource proportion is positively correlated with a predicted value of a delay of the target area.

8.   The method according to claim 5, wherein the second resource proportion is positively correlated with a predicted value of a Doppler frequency shift of the target area.

9.   The method according to any one of claims 3 to 8, wherein the determining the predicted value of the communication characteristic parameter of the target area based on the actual value of the communication characteristic parameter of the target area comprises:
performing a weighted sum calculation on an actual value of the communication characteristic parameter of the target area at a first moment and a predicted value of the communication characteristic parameter of the target area at the first moment, so as to obtain a predicted value of the communication characteristic parameter of the target area at a second moment after the first moment.

10.  The method according to any one of claims 3 to 8, wherein the determining the predicted value of the communication characteristic parameter of the target area based on the actual value of the communication characteristic parameter of the target area comprises:
inputting the actual value of the communication characteristic parameter of the target area into a timing prediction model, so as to obtain a predicted value of the communication characteristic parameter of the target area output by the timing prediction model.

11.  The method according to any one of claims 1 to 8, wherein the sensing signal of the target area is acquired by:

receiving a signal through a beam matching the target area; and
screening out the sensing signal from the signal received from the beam matching the target area.

12.  A communication node, comprising: a memory and a processor; the memory being coupled to the processor;
wherein the memory is used to store a computer program, the computer program comprises computer instructions, and the processor, upon executing the computer instructions, implements the communication sensing method according to any one of claims 1 to 11.

13.  A computer-readable storage medium, wherein the computer-readable storage medium has computer instructions stored thereon, and the computer instructions, upon being executed on a computer, enable the computer to perform the communication sensing method according to any one of claims 1 to 11.

14.  A computer program product, comprising computer program instructions, wherein the computer program instructions, upon being executed by a processor, implement the communication sensing method according to any one of claims 1 to 11.

FIG. 1

Acquire a reference signal from a satellite and a sensing signal of a target area

S101

Determine an actual value of a communication characteristic parameter of the target area based on the reference signal and the sensing signal

S102

FIG. 2

FIG. 3

FIG. 4

FIG. 5

FIG. 6

FIG. 7

| Acquire a reference signal from a satellite and a sensing signal of a target area | S101 |

↓

| Determine an actual value of a communication feature parameter of the target area on the basis of the reference signal and the sensing signal | S102 |

↓

| Determine a predicted value of the communication feature parameter of the target area on the basis of the actual value of the communication feature parameter of the target area | S103 |

FIG. 8

| Acquire a reference signal from a satellite and a sensing signal of a target area | S101 |

↓

| Determine an actual value of a communication characteristic parameter of the target area based on the reference signal and the sensing signal | S102 |

↓

| Determine a predicted value of the communication characteristic parameter of the target area according to the actual value of the communication characteristic parameter of the target area | S103 |

↓

| Determine configuration information of a communication resource according to the predicted value of the communication characteristic parameter of the target area | S104 |

FIG. 9

Communication node1000

Acquisition module — 1001

Processing module — 1002

FIG. 10

1100

1102    1103

Processor    Communication interface

1104

Bus

Memory

1101

FIG. 11

## INTERNATIONAL SEARCH REPORT

<table>
<tr><td>International application No.<br>**PCT/CN2023/121108**</td></tr>
</table>

### A. CLASSIFICATION OF SUBJECT MATTER

H04B7/185(2006.01)i; H04W72/542(2023.01)i

According to International Patent Classification (IPC) or to both national classification and IPC

### B. FIELDS SEARCHED

Minimum documentation searched (classification system followed by classification symbols)

IPC:H04B, H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, WOTXT: 参考信号, 参数, 感知, 区域, 通信, 感知, 一体化, 频移, 卫星, 时延, area, cell, delay, DRFC, direct, doppler, frequency, GNSS, GPS, ISAC, reference, region, RS, satcom, satellite, shift, signal, SSAC, target, zone, integrat+, sens+, communicat+, parameter?, predict+

### C. DOCUMENTS CONSIDERED TO BE RELEVANT

| Category* | Citation of document, with indication, where appropriate, of the relevant passages | Relevant to claim No. |
|---|---|---|
| X | CN 113746534 A (SOUTHEAST UNIVERSITY) 03 December 2021 (2021-12-03)<br>description, paragraphs 2-120, and figures 1-2 | 1-14 |
| X | WO 2022000508 A1 (BEIJING XIAOMI MOBILE SOFTWARE CO., LTD.) 06 January 2022 (2022-01-06)<br>description, pages 4-16, and figures 1-8 | 1-14 |
| A | WO 2017144866 A2 (LIVE EARTH IMAGING ENTERPRISES LLC et al.) 31 August 2017 (2017-08-31)<br>entire document | 1-14 |
| A | CHINA MOBILE et al. "New SID on Integrated Sensing and Communication"<br>*3GPP SA WG1 Meeting #97e, S1-220144r6*, 24 February 2022 (2022-02-24),<br>entire document | 1-14 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 November 2023** | **21 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121108**

| Patent document cited in search report | | | Publication date (day/month/year) | Patent family member(s) | | | Publication date (day/month/year) |
|---|---|---|---|---|---|---|---|
| CN | 113746534 | A | 03 December 2021 | WO | 2023044982 | A1 | 30 March 2023 |
| WO | 2022000508 | A1 | 06 January 2022 | US | 2023239040 | A1 | 27 July 2023 |
| | | | | CN | 114144978 | A | 04 March 2022 |
| WO | 2017144866 | A2 | 31 August 2017 | JP | 2019512989 | A | 16 May 2019 |
| | | | | CA | 3014720 | A1 | 31 August 2017 |
| | | | | AU | 2017223078 | A1 | 13 September 2018 |
| | | | | EP | 3420309 | A2 | 02 January 2019 |
| | | | | US | 2021385377 | A1 | 09 December 2021 |

Form PCT/ISA/210 (patent family annex) (July 2022)

**EP 4 618 440 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211385270X